Europäisches Patentamt

European Patent Office

Office européen des brevets

(11) Publication number: **0 486 970 A1**

# EUROPEAN PATENT APPLICATION

(21) Application number: **91119541.0**

(22) Date of filing: **15.11.91**

(51) Int. Cl.5: **C04B 41/90**

(30) Priority: **19.11.90 JP 314986/90**

(43) Date of publication of application:
**27.05.92 Bulletin 92/22**

(84) Designated Contracting States:
**DE ES GB IT**

(71) Applicant: **INAX CORPORATION**
**5-1 Koiehonmachi**
**Tokoname-Shi, Aichi(JP)**

(72) Inventor: **Kawagoe, Keiji, c/o Inax Corporation**
**5-1, Koiehonmachi**
**Tokoname-shi, Aichi(JP)**
Inventor: **Takai, Tadasu, c/o Inax Corporation**
**5-1, Koiehonmachi**
**Tokoname-shi, Aichi(JP)**

(74) Representative: **Patentanwälte Grünecker,**
**Kinkeldey, Stockmair & Partner**
**Maximilianstrasse 58**
**W-8000 München 22(DE)**

(54) Process for producing ceramics having a surface similar to a metal.

(57) A process for producing a ceramic (3) having a surface (4) similar to a metal, which comprise coating a mixed liquid composed of 10 to 40 parts by weight of a luster liquid, 0.1 to 2.5 parts by weight of a mica powder and 10 to 40 patrs by weight of a solvent on the surface of a ceramic (1) glazed with a mat or bright glaze (2) and fired, and treating the ceramic by firing at a temperature of 700 to 900° C.

FIG.1

## FIELD OF THE INVENTION

This invention relates to a ceramic having a metallic luster or oxidized silver luster.

## RELATED ART

In ceramics such as tiles, a brilliant reflective luster such as a mirror surface is obtained by adhering a metallic thin layer to the surface. To produce ceramics of this type, a metal vapor deposition method using $TiCl_4$ is applied to the surface of a ceramic which is glazed and fired. In this invention, the ceramic includes earthenware and porcelain.

The ceramics subjected to the metal vapor deposition are uniformly slippery and smooth entirely and may be apparently looked as a metal plate surface or plated surface having no minute scar. But other metallic skins (such as a metallic luster shining by diffused reflection, or as an oxidized silver having a deep somber brilliancy) cannot be expressed. For this reason, to express several kinds of metals by a ceramic is limited.

## OBJECT AND SUMMARY OF THE INVENTION

The present invention was made in view of the above situation. The present invention is to provide a novel method by which a ceramic having a surface with a metallic luster and an oxidized silver luster may be produced.

This invention provides a process for producing a ceramic having a surface similar to a metal, which comprises coating a mixed liquid composed of 10 to 40 parts by weight of a luster, 0.1 to 2.5 parts by weight of a mica powder, and 10 to 40 parts of a solvent, on the surface of a ceramic which is glazed with a mat or bright glazing agent, and firing the ceramic at a temperature of 700 to 900° C.

The luster liquid is to emit a strong reflection luster by a firing treatment, but the micaceous powder present in the luster liquid moderately inhibits its reflection property, and the micaceous powder itself emits a fine diffused reflection. These situations are looked as colored in a desired color depending upon a mat or bright glazing agent which becomes as a substrate. For this reason, it is possible to express a shining metallic luster and a deep somber oxidized silver luster.

The luster is kind of glaze or pigment used in a decorating method of ceramic articles. The luster is fired on the surface of an article to form a metallic thin film, in which by an interference ation of light, a beautiful brilliancy is formed. A metal resin acid salt dissolved in a solvent (such as a lavender oil, a rosemary oil and a camphor oil) is called a luster liquid. When the luster liquid is fired on coating on the surface of an article, the organic material is fired out, and a metallic coating is formed by reduction. The luster liquid is a colored luster liquid and an uncolored luster liquid. The latter may be added to the former to increase its adhesion strength. The metals which are used in the colored luster liquid include iron (reddish brown color), manganese (violet), copper (blue), nickel (gray), chromium (green), cobalt (blue), uranium (yellow), and cadmium (yellow). The metals which are used in the uncolored luster liquid include aluminum, titanium, tin, lead, and zinc. Typical lusters include a bismuth luster using bismuth and a cadmium luster using cadmium.

In the present invention, the various luster liquids described above can be used. The concentration of the metal resin acid in the luster liquid is 20 to 80% by weight, and preferably 45% to 55% by weight.

Various types of mica can be used in this invention. They include muscovite, biotite, phlogopite, lepidolite and sericite. But the mica may be other types of mica.

The solvent to be mixed with the luster liquid and the mica may have compatibility with the solvent of the luster liquid such as lavender oil, rosemary oil, or camphor oil. Examples are turpentine oil and toluene.

The mat glaze is a colorless or a colored glaze having a small amount of brilliancy. Typical examples of the mat glaze include "Teco ware mat", "Rockwood vellum mat", "Ortons mat", "Mintons mat for Terra Cotta", "Van Briggle mat", and "Knollmann mat". In the present invention, various mat glazes including these may be used. Examples of the bright glazes may include "Lead glaze", "Alkaline glaze", "Calcareous glaze", "Felspathic glaze", "Boracic glaze". They may be used including these exemplified above.

The ceramics used in this invention are not limited to architectural materials such as tiles. They may include sanitary ware such as close stools and wash basins and industrial art works such as vases and tea utensils. The present invention (the first method and the second method) in its minute construction may be properly changed according to the embodiments.

The process of this invention for the production of ceramics having a surface similar to a metallic surface can express a shining metallic luster to an oxidized silver luster having a deep somber shining. Thus, almost all metallic materials may be expressed. Hence, all articles formed by ceramics can produce a high quality feeling and a thick and heavy feeling and give unexpectedness. From this fact, articles which were hitherto not produced from ceramics were attempted widely to be produced from ceramics. Thus, the process of this invention has various excellent advantages.

BRIEF DESCRIPTION OF THE DRAWINGS

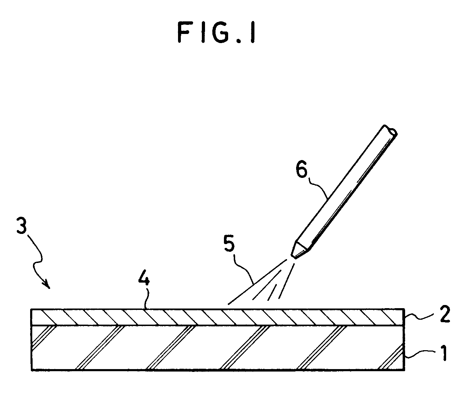

Fig. 1 is a side elevation showing the process of this invention.

PREFERRED EMBODIMENTS

By glazing a mat glazing agent 2 to a raw mat 1 of a ceramic and firing it, a ceramic 3 having a substrate glazing layer 4 is produced. The composition of the ceramic 3 and the process for its production may be all known ones.

The mixed luster liquid 5 is sprayed on the surface of the substrate glazing layer 4 of the ceramic 3. The mixed luster liquid 5 is a mixture of the luster liquid, the mica powder and the solvent at specified ratio. The luster liquid is used one containing a titanium resin acid salt solution as a main component, and its proportion to be added is 10 to 40 parts by weight. If is less than 10 pats by weight, sufficient coloration and reflection luster cannot be obtained by the firing treatment conducted later. If it exceeds 40 parts by weight, precipitation will be produced and unevenness may occur at the time of coating the mixed liquid 5, and after 8 coating, delamination is likely to occur. The mica powder is a fine powder of mica, and its proportion is 0.1 to 2.5 parts by weight. If the proportion is less than 0.1 part by weight, the reflective luster of the luster liquid cannot be fully inhibited. If the proportion exceeds 2.5 parts by weight, the reflective luster of the luster liquid is lost too much, and the bonding strength to the luster liquid has a defect of being weakened. Turpentine oil, toluene, etc., are used as the solvent, and its proportion is limited to 10 to 40 parts by weight. If the proportion is less than 10 parts by weight, the luster mixture 5 is difficult to spray. If the proportion exceeds 40 parts by weight, the luster mixture 5 after coating is likely to form a flow.

After the luster mixture 5 has been coated on the surface of the substrate glazing layer 4 of the ceramic 3, the ceramic 3 is treated by firing at a temperature of 700 to 900° C. If the firing temperature is lower than 700° C, coloration and reflective luster by the luster liquid cannot sufficiently be obtained, and the delamination is likely to occur by poor firing. If the firing temperature is higher than 900° C, the substrate glazing layer 4 (mat glaze or bright glaze) of the ceramic dissolves out and reacts with the luster mixture 5 so that the coloration cannot be obtained as expected.

Example 1

As 25 parts by weight of a luster liquid, was mixed with 1 parts by weight of Muscovite as mica in a particle size of mesh (330 or below) and 25 parts by weight of turpentine oil as a solvent. The mixed liquid was sprayed by a spray gun on the surface of a tile glazed with a mat glaze. The amount of take-up of the mixture was 0.02 g/cm$^2$ per cm$^2$ of the tile surface. The coating was dried at a room temperature for 30 minutes, and fired at 850°C for 30 minutes using an electric furnace (the drawing is shown). The resulting tile had its surface emitting a deep and somber brilliancy, and was like an oxidized silver.

Example 2

The glaze of the tile was changed to another mat glaze. Otherwise, the surface of the tile was treated as in Example 1.

The tile obtained was of metallic luster which produced diffused reflection brilliantly.

**Claims**

1. A process for producing a ceramic having a surface similar to a metal, which comprises coating a mixture of 10 to 40 parts by weight of luster liquid, 0.1 to 2.5 parts by weight of a mica powder, and 10 to 40 parts by weight of a solvent on the surface of a ceramic which is glazed with at least one of a mat glaze and a bright glaze and fired, and then treating the ceramic by firing at a temperature of 700 to 900° C.

2. The method of claim 1 wherein the luster liquid is a solution of a metal resin acid salt in a solvent such as lavender oil, rosemary oil or camphor oil.

3. The method of claim 2 wherein the metal is at least one of titanium, iron, manganese, copper, nickel, chromium, cobalt, uranium, cadmium, aluminum, tin, lead, zinc and bismuth.

4. The method of claim 1 wherein the concentration of the luster liquid is 20 to 80 % by weight.

5. The method of claim 1 wherein the solvent is at least one of turpentine oil, toluene, acetone, thinner, ethanol and so on.

6. The method of claim 1 wherein the coating is performed by spraying.

7. The method of claim 1 wherein after coating, the coated ceramic is dried.

# F I G. I

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 418 099 (D. L. CUEVAS ET AL)<br>* abstract; claims 1-2,6-11,19-20 *<br>* column 1, line 63 - column 2, line 51 *<br>* column 3, line 12 - line 38 *<br>* column 7, line 1 - line 21 *<br>--- | 1-7 | C04B41/90 |
| A | EP-A-0 364 691 (DEGUSSA AG)<br>* column 1, line 1 - line 29; claim 1 *<br>* column 2, line 53 - column 4, line 33 *<br>--- | 1-3,5-7 | |
| A | FR-A-2 548 962 (SAINT-GOBAIN DESJONQUERES)<br>* abstract; claims 1,8,10 *<br>* page 1, line 1 - line 33 *<br>* page 3, line 6 - page 4, line 28 *<br>--- | 1,3,7 | |
| A | DE-A-3 507 595 (R. WENDEL)<br>* claims 1,3-6,13 *<br>* page 6, line 21 - page 7, line 36 *<br>* page 11, line 1 - page 13, line 7 *<br>--- | 1,6-7 | |
| A | DR. HANS-JOACHIM KRAUSE 'Ullmans Encyclopädie der technischen chemie, vol. 14, Keramische farben.' , VERLAG CHEMIE , WEINHEIM, N.Y.<br>* page 9, column 2, line 38 - page 10, column 1, line 12 *<br>* page 11, column 1, line 32 - column 2, line 30 *<br>----- | 1-3,5-6 | TECHNICAL FIELDS SEARCHED (Int. Cl.5 )<br><br>C04B |

The present search report has been drawn up for all claims

| Place of search | Date of completion of the search | Examiner |
|---|---|---|
| THE HAGUE | 14 FEBRUARY 1992 | OLSSON S.A. |

EPO FORM 1503 03.82 (P0401)